# EUROPÄISCHE PATENTSCHRIFT

(11) **EP 2 735 727 B1**
(45) Veröffentlichungstag und Bekanntmachung des Hinweises auf die Patenterteilung: **09.01.2019**
(21) Anmeldenummer: 13191532.4
(22) Anmeldetag: 05.11.2013
(51) Int. Cl.: F02N 7/00, F02D 41/04, B60K 6/12

(54) **Hydrostatisches Triebwerk als hydraulischer Starter eines Verbrennungsmotors**
Hydrostatic motor as hydraulic starter for an internal combustion engine
Moteur hydrostatique en tant que démarreur hydraulique d'un moteur à combustion

(30) Priorität: 22.11.2012 DE 102012111300
(43) Veröffentlichungstag der Anmeldung: 28.05.2014
(73) Patentinhaber: Linde Hydraulics GmbH & Co. KG, 63743 Aschaffenburg (DE)
(72) Erfinder: Krittian, Lukas, 63739 Aschaffenburg (DE); Oberhäußer, Martin, 63743 Aschaffenburg (DE); Langen, Alfred, Dr., 63762 Großostheim (DE); Steigerwald, Martin, 63864 Glattbach (DE)
(74) Vertreter: Patentship Patentanwaltsgesellschaft mbH

(56) Entgegenhaltungen:
- DE-A1- 2 542 244
- DE-A1-102009 056 153

## Beschreibung

Die Erfindung betrifft ein hydrostatisches Triebwerk, das als Verstellmaschine mit einem stufenlos verstellbaren Verdrängervolumen ausgebildet ist und als Pumpe und Motor betreibbar und mit einem Verbrennungsmotor trieblich verbindbar ist, wobei das Triebwerk im Pumpenbetrieb mit einer Saugseite Druckmittel aus einem Behälter ansaugt und in eine zu mindestens einem Verbraucher geführte Förderleitung fördert und wobei das Triebwerk im Motorbetrieb als hydraulischer Starter zum Starten des Verbrennungsmotors ausgebildet ist, wobei dem Triebwerk im Motorbetrieb an der Saugseite Druckmittel aus einem Druckmittelspeicher zuführbar ist, wobei das Verdrängervolumen des Triebwerks mittels einer Verdrängervolumenstelleinrichtung einstellbar ist, die mit einer Stelleinrichtung betätigbar ist.

Derartige hydrostatische Triebwerke, die im Pumpenbetrieb, in dem das Triebwerk von dem laufenden Verbrennungsmotor angetrieben ist, zur Versorgung von mindestens einem Verbraucher mit Druckmittel dienen, und im Motorbetrieb einen hydraulischen Starter zum Starten des abgestellten Verbrennungsmotor dienen, werden in mobilen Arbeitsmaschinen, insbesondere Flurförderzeuge, Landmaschinen, Forstmaschinen und Baumaschinen, beispielsweise Bagger, Rad- und Teleskoplader, Schlepper, Mähdrescher, Feldhäcksler, Zuckerrüben- oder Kartoffelroder, eingesetzt.

Um den Kraftstoffverbrauch während Arbeitspausen oder Arbeitsunterbrechungen zu verringern, ist eine Start-Stopp-Funktion für den Verbrennungsmotor vorgesehen, bei der der unbelastete Verbrennungsmotor in Arbeitspausen oder bei Arbeitsunterbrechungen abgeschaltet wird und bei einer Drehmomentanforderung durch eine Arbeitsfunktion oder den Fahrantrieb automatisch wieder gestartet wird. Mit einem hydraulischen Starter kann eine derartige Start-Stopp-Funktion des Verbrennungsmotors in robuster und zuverlässiger Weise erzielt werden.

Aus der EP 2 308 795 A1 ist ein gattungsgemäßes hydrostatisches Triebwerk bekannt, das im Pumpenbetrieb, wobei das von einem Verbrennungsmotor angetriebene Triebwerk mit einer Saugseite Druckmittel aus einem Behälter ansaugt, zur Versorgung der Verbraucher einer Arbeitshydraulik mit Druckmittel dient und in einem Motorbetrieb, wobei dem Triebwerk an der Saugseite Druckmittel aus einem Druckmittelspeicher zugeführt wird und das Triebwerk von dem aus dem Druckmittelspeicher zugeführten Druckmittel angetrieben wird, als hydraulischer Starter zum Starten des abgestellten Verbrennungsmotors dient.

Sofern das Triebwerk als Verstellmaschine mit einem stufenlos verstellbaren Verdrängervolumen ausgebildet ist, ist das Triebwerk für den Motorbetrieb auf eine Stellung mit maximalem Verdrängervolumen zu verstellen, um die Abgabe eines Drehmoments zum Starten des Verbrennungsmotors zu ermöglichen. Aus der EP 2 308 795 A1 (Figur 2) ist hierzu bekannt, eine das Verdrängervolumen steuernde Verstellvorrichtung des Triebwerks mit dem Druckmittelspeicher zu verbinden, so dass die Verdrängervolumenstelleinrichtung des Triebwerks bei abgestelltem Verbrennungsmotor mit dem Druckmittel aus dem Druckmittelspeicher betätigt werden kann. Hierzu ist der Druckmittelspeicher über ein Druckminderventil mit einem Speisedruckkreis verbunden, der bei laufendem Verbrennungsmotor zur Versorgung der Verstellvorrichtung des Triebwerks mit Druckmittel dient. Der Speisedruckkreis ist stromab einer Ventileinrichtung, die den Motorbetrieb des Triebwerks durch eine Verbindung des Druckmittelspeichers mit der Saugseite des Triebwerks steuert, an den Druckmittelspeicher angeschlossen, so dass die Verdrängervolumenstelleinrichtung zeitlich unmittelbar vor dem Startvorgang des Verbrennungsmotors mit dem Druckmittel aus dem Druckmittelspeicher in die Stellung mit maximalem Verdrängervolumen verstellt wird. Hierdurch ergibt sich jedoch durch die Verstellung der Verdrängervolumenstelleinrichtung zu Beginn des Startvorgangs eine zeitliche Verzögerung beim Startvorgang des Verbrennungsmotors, die bei einer Start-Stopp-Funktion, in der der Startvorgang des Verbrennungsmotos in einer kurzen Zeitspanne erfolgen soll, zu Nachteilen führt.

Der vorliegenden Erfindung liegt die Aufgabe zugrunde, ein hydrostatisches Triebwerk der eingangs genannten Gattung zur Verfügung zu stellen, das bei geringem Bauaufwand einen Start des Verbrennungsmotors im Motorbetrieb des Triebwerks in einer kurzen Zeitspanne ermöglicht.

Diese Aufgabe wird erfindungsgemäß dadurch gelöst, dass die Stelleinrichtung elektrisch ansteuerbar und eine die Stelleinrichtung ansteuernde elektronische Steuereinrichtung vorgesehen ist, wobei die elektronische Stelleinrichtung derart ausgebildet ist, dass die Verdrängervolumenstelleinrichtung durch entsprechende Ansteuerung der Stelleinrichtung zeitlich vor dem Abstellen des Verbrennungsmotors in die Stellung mit maximalem Verdrängervolumen beaufschlagt wird, und dass eine Sicherungseinrichtung vorgesehen ist, die bei abgestelltem Verbrennungsmotor die Verdrängervolumenstelleinrichtung in der Stellung mit maximalem Verdrängervolumen hält. Bei dem erfindungsgemäßen Triebwerk wird somit die Verdrängervolumenstelleinrichtung vor dem Abstellen und Abschalten des Verbrennungsmotors, beispielsweise in einer Arbeitspause oder bei einer Arbeitsunterbrechung, in die Stellung mit maximalem Verdrängervolumen betätigt und verstellt und in dieser Stellung mittels der Sicherungseinrichtung bei abgestelltem Verbrennungsmotor gesichert. Bei einer Beaufschlagung der Saugseite des Triebwerks mit Druckmittel aus dem Druckmittelspeicher zum Start des Verbrennungsmotors wird somit erzielt, dass sich das Triebwerk mittels der von der Sicherungseinrichtung gehaltenen Verdrängervolumenstelleinrichtung zu Beginn des Startvorgangs des Verbrennungsmotors bereits in der Stellung mit maximalem Verdrängervolumen befindet, so dass der Startvorgang des Verbrennungsmotors unmittelbar erfolgen kann und kein Verstellen der Verdrängervolumenstelleinrichtung auf das maximale Verdrängervolumen zu Beginn des Startvorgangs erforderlich ist. In Verbindung mit der erfindungsgemäßen Sicherungseinrichtung und dem entsprechen Verstellen des Triebwerks auf die Stellung mit maximalem Verdrängervolumen vor dem Abstellen des Verbrennungsmotors wird somit auf einfache Weise und mit geringem Bauaufwand ein Startvorgang des abgestellten Verbrennungsmotors im Motorbetrieb des Triebwerks in einer kurzen Zeitspanne ermöglicht.

Gemäß einer vorteilhaften Ausführungsform der Erfindung ist die Stelleinrichtung zur Versorgung mit Druckmittel an einen Speisedruckkreis und an den Druckmittelspeicher angeschlossen und ist die Sicherungseinrichtung als Sperrventil ausgebildet, das in der Verbindung der Stelleinrichtung mit dem Speisedruckkreis angeordnet ist. Eine hydraulische bzw. elektro-hydraulische Stelleinrichtung kann durch die Verbindung mit einem Speisedruckkreis und dem Druckmittelspeicher auf einfache Weise mit Druckmittel zur Verstellung und Betätigung der Verdrängervolumenstelleinrichtung versorgt werden. Die Verbindung der Stelleinrichtung mit dem Druckmittelspeicher ermöglicht es auf einfache Weise, dass der Stelldruck zum Halten der Verdrängervolumenstelleinrichtung in der Stellung mit maximalem Verdrängervolumen bei abgestelltem Verbrennungsmotor aus dem geladenen Druckmittelspeicher zur Verfügung gestellt wird. Das Sperrventil bildet eine hydraulische Sicherungseinrichtung, die verhindert, dass sich der Druckmittelspeicher bei abgestelltem Verbrennungsmotor über den Speisedruckkreis entladen kann, so dass die Verdrängervolumenstelleinrichtung bei abgestelltem Verbrennungsmotor mit dem aus dem Druckmittelspeicher zur Verfügung gestellten Stelldruck sicher in der Stellung mit maximalem Verdrängervolumen gehalten werden kann.

Das Sperrventil ist gemäß einer bevorzugten Ausgestaltungsform der Erfindung als in Richtung zum Speisedruckkreis sperrendes Rückschlagventil ausgebildet. Mit einem derartigen Rückschlagventil kann auf einfache Weise bei abgestelltem Verbrennungsmotor die von dem Druckmittelspeicher versorgte Stelleinrichtung von dem Speisedruckkreis abgetrennt werden, um ein Entladen des Druckmittelspeichers zu verhindern.

Mit besonderem Vorteil ist zur Steuerung der Verbindung des Druckmittelspeichers mit der Saugseite des Triebwerks ein elektrisch betätigbares Steuerventil vorgesehen ist, wobei die Stelleinrichtung unabhängig von der Stellung des Steuerventils mit Druckmittel aus dem Druckmittelspeicher versorgbar ist. Zweckmäßigerweise ist die Verbindung des Druckmittelspeichers mit der Saugseite der Hydraulikpumpe mittels eines elektrisch betätigbaren Steuerventils steuerbar. Mit einem derartigen elektrisch betätigbaren Steuerventil kann auf einfache Weise der Motorbetrieb der Hydraulikpumpe bei einem Startvorgang des abgestellten Verbrennungsmotors gesteuert werden. Sofern die Stelleinrichtung unabhängig von der Stellung des Steuerventils mit Druckmittel aus dem Druckmittelspeicher versorgbar ist, wird auf einfache Weise erzielt, dass auch in einer Sperrstellung des Steuerventils die Stelleinrichtung mit Druckmittel aus dem Druckmittelspeicher versorgbar ist, um bei abgestelltem Verbrennungsmotor und in der Sperrstellung befindlichem Steuerventil den Stelldruck zum Halten der Verdrängervolumenstelleinrichtung in der Stellung mit maximalem Verdrängervolumen aus dem geladenen Druckmittelspeicher zur Verfügung zu stellen.

Gemäß einer vorteilhaften Ausgestaltungsform der Erfindung ist das Steuerventil in einer von dem Druckmittelspeicher zu einer Ansaugleitung der Hydraulikpumpe geführten Verbindungsleitung angeordnet, wobei die Ansaugleitung von dem Behälter zur Saugseite der Hydraulikpumpe geführt ist, und ist zur Versorgung der Stelleinrichtung mit Druckmittel aus dem Druckmittelspeicher eine Druckmittelleitung vorgesehen, die stromauf des Steuerventils an die Verbindungsleitung angeschlossen ist. Durch den Anschluss der zur Stelleinrichtung geführten Druckmittelleitung an die Verbindungsleitung stromauf des Steuerventils wird auf einfache Weise erzielt, dass der Druckmittelspeicher unabhängig von der Stellung des Steuerventils und somit auch bei in einer Sperrstellung befindlichem Steuerventil mit der Stelleinrichtung in Verbindung steht, um den Stelldruck bei abgestelltem Verbrennungsmotor aufrecht zu erhalten.

Mit besonderem Vorteil ist die Druckmittelleitung an eine von dem Speisedruckkreis zu der Stelleinrichtung geführte Stelldruckleitung angeschlossen, in der das Sperrventil angeordnet ist, wobei die Druckmittelleitung zwischen dem Sperrventil und der Stelleinrichtung an die Stelldruckleitung angeschlossen ist. Mit einem derartigen Anschluss der Druckmittelleitung an die mit dem Sperrventil versehene Stelldruckleitung wird auf einfache Weise verhindert, dass sich der Druckmittelspeicher bei abgestelltem Verbrennungsmotor zu dem Speisedruckkreis entladen kann, so dass der Stelldruck zum Halten der Verdrängervolumenstelleinrichtung auf einfache Weise aus dem Druckmittelspeicher bei abgestelltem Verbrennungsmotor aufrechterhalten werden kann.

Gemäß einer alternativen und ebenfalls vorteilhaften Ausführungsform der Erfindung ist die Sicherungseinrichtung als mechanische Verriegelung der Verdrängervolumenstelleinrichtung ausgebildet. Mit einer mechanischen und bevorzugt formschlüssigen Verriegelung kann ebenfalls mit geringem Bauaufwand und auf einfache Weise die Verdrängervolumenstelleinrichtung nach dem Verstellen in die Stellung mit maximalem Verdrängervolumen bei abgestelltem Verbrennungsmotor in dieser Stellung gehalten werden und ein Zurückverstellen der Verdrängervolumenstelleinrichtung in eine Stellung mit minimalem Verdrängervolumen sicher verhindert werden.

Die mechanische Verriegelung ist gemäß einer vorteilhaften Ausgestaltungsform der Erfindung von einem eine Verriegelungsstellung und eine Lösestellung aufweisenden Verriegelungsmittel gebildet, das mit der in der Stellung mit maximalem Verdrängervolumen befindlichen Verdrängervolumenstelleinrichtung formschlüssig in Wirkverbindung bringbar ist. Mit einem derartigen Verriegelungsmittel, das zwischen einer Lösestellung und einer Verriegelungsstellung betätigbar ist und in der Verriegelungsstellung formschlüssig in die Verdrängervolumenstelleinrichtung eingreift, kann eine einfach aufgebaute mechanische Sicherung und Fixierung der Verdrängervolumenstelleinrichtung in der Stellung mit maximalem Verdrängervolumen erzielt werden.

Gemäß einer bevorzugten Ausgestaltungsform der Erfindung ist das Verriegelungsmittel als Verriegelungshebel ausgebildet. Mit einem Verriegelungshebel, der beispielsweise mit einem Verriegelungshaken in eine entsprechende Ausnehmung der Verdrängervolumenstelleinrichtung eingreift, kann eine einfach aufgebaute Sicherung der Verdrängervolumenstelleinrichtung in der Stellung mit maximalem Verdrängervolumen erzielt werden.

Das Verriegelungsmittel kann mit einer Federeinrichtung in die Verriegelungsstellung und mittels einer elektrischen Betätigungseinrichtung in die Lösestellung betätigbar sein. Gemäß einer bevorzugten Ausgestaltungsform der Erfindung ist das Verriegelungsmittel mittels einer Federeinrichtung in eine Lösestellung betätigt und mittels einer elektrischen Betätigungseinrichtung in eine Verriegelungsstellung betätigbar. Hierdurch wird eine hohe Betriebssicherheit erzielt, da im unbestromten Zustand der elektrischen Betätigungseinrichtung das Verriegelungsmittel mittels der Federeinrichtung in die Lösestellung beaufschlagt wird.

Die elektrische Betätigungseinrichtung ist bevorzugt als Schaltmagnet ausgebildet, wodurch das Verriegelungsmittel mit geringem Bauaufwand in die Verriegelungsstellung betätigbar ist.

Das Verriegelungsmittel ist zweckmäßigerweise bei Erreichen der Stellung mit maximalem Verdrängervolumen in die Verriegelungsstellung betätigbar, so dass bei abgestelltem Verbrennungsmotor die Verdrängervolumenstelleinrichtung sicher in der Stellung mit maximalem Verdrängervolumen gehalten werden kann.

Sofern das Verriegelungsmittel nach dem Startvorgang des Verbrennungsmotors in die Lösestellung betätigbar ist, wird auf einfache Weise erzielt, dass die Verdrängervolumenstelleinrichtung in Richtung einer Verringerung des Verdrängervolumens verstellbar ist, um den laufenden Verbrennungsmotor zu entlasten und bei einer Betätigung des Verbrauchers das Verdrängervolumen des Triebwerks im Pumpenbetrieb an den angeforderten Volumenstrombedarf des Verbrauchers anpassen zu können.

Gemäß einer vorteilhaften Ausgestaltungsform der Erfindung ist die Verdrängervolumenstelleinrichtung mittels einer Federeinrichtung in Richtung eines minimalen Verdrängervolumens beaufschlagt. Bei laufendem Verbrennungsmotor und nicht angesteuerten Verbraucher wird somit auf einfache Weise erzielt, dass sich das Triebwerk im Pumpenbetrieb in der Stellung mit minimalem Verdrängervolumen, bevorzugt einer Stellung mit Verdrängervolumen Null, befindet und geringe Verluste verursacht.

Gemäß einer vorteilhaften Ausführungsform der Erfindung ist das Triebwerk als einseitig verstellbares Triebwerk ausgebildet und ist die Verdrängervolumenstelleinrichtung des Triebwerks ausgehend von einer Stellung mit minimalem Verdrängervolumen in eine Stellrichtung verstellbar. Derartige einseitig verstellbare Triebwerke werden im offenen Kreislauf betrieben und ermöglichen bei geringem Bauaufwand und bei geringem Energieverbrauch im Pumpenbetrieb eine Versorgung der angeschlossenen Verbraucher mit Druckmittel. Durch das erfindungsgemäße Verstellen und Beaufschlagen der Verdrängervolumenstelleinrichtung in die Stellung mit maximalem Verdrängervolumen vor dem Abstellen des Verbrennungsmotors und die Sicherung der Verdrängervolumenstelleinrichtung in der Stellung mit maximalem Verdrängervolumen durch die Sicherungseinrichtung bei abgestelltem Verbrennungsmotor kann ein derartiges als einseitig verstellbare Pumpe ausgebildetes Triebwerk auf einfache Weise als Motor betrieben werden, der ein schnelles Startverhalten des Verbrennungsmotors bei einer Start-Stopp-Funktion ermöglicht.

Besondere Vorteile ergeben sich, wenn der Verbraucher als Arbeitshydrauliksystem einer Arbeitsmaschine ausgebildet ist und das Triebwerk im Pumpenbetrieb das Arbeitshydrauliksystem mit Druckmittel versorgt. Die zur Versorgung des Arbeitshydrauliksystems vorhandene Verstellpumpe kann somit auf einfache Weise als hydraulischer Starter zum Starten des Verbrennungsmotors verwendet werden, um eine Start-Stopp-Funktion des Verbrennungsmotors zu ermöglichen.

Bevorzugt ist das Triebwerk als Axialkolbenmaschine in Schrägscheibenbauweise ausgebildet.

Die Erfindung betrifft weiterhin einen Antriebsstrang eines als mobile Arbeitsmaschine ausgebildeten Fahrzeugs, mit einem von einem Verbrennungsmotor angetrieben erfindungsgemäßen hydrostatischen Triebwerk, wobei das Triebwerk im Motorbetrieb einen hydraulischen Starter des Verbrennungsmotors bildet und im Pumpenbetrieb ein Arbeitshydrauliksystem der Arbeitsmaschine mit Druckmittel versorgt. Mit dem erfindungsgemäßen hydrostatischen Triebwerk kann bei einem Fahrzeug auf einfache Weise eine Start-Stopp-Funktion gebildet werden, die eine kurze Startzeit des abgestellten Verbrennungsmotors aufweist.

Die Erfindung betrifft ein Verfahren zum Betrieb eines erfindungsgemäßen Antriebsstranges, wobei zeitlich vor dem Abstellen des Verbrennungsmotors durch eine Ansteuerung der Stelleinrichtung die Verdrängervolumenstelleinrichtung des Triebwerks in die Stellung mit maximalem Verdrängervolumen beaufschlagt und mittels der Sicherungseinrichtung bei abgestelltem Verbrennungsmotor in dieser Stellung gehalten wird. Dadurch wird ein schneller Startvorgang des Verbrennungsmotors bei einer Start-Stopp-Funktion im Motorbetrieb des Triebwerks erzielt, da sich das Triebwerk zu Beginn des Startvorgangs bereits in der Stellung mit maximalem Verdrängervolumen befindet und kein Verstellen der Verdrängervolumenstelleinrichtung des Triebwerks zu Beginn des Startvorgangs des Verbrennungsmotors erforderlich ist.

Bei einer als mechanischen Verriegelung ausgebildeten Sicherungseinrichtung wird zweckmäßigerweise bei Erreichen der Stellung mit maximalem Verdrängervolumen das Verriegelungsmittel in die Verriegelungsstellung betätigt und nach dem Startvorgang des Verbrennungsmotors das Verriegelungsmittel in die Lösestellung betätigt. Hierdurch wird auf einfache Weise erzielt, dass die Verdrängervolumenstelleinrichtung des Triebwerks bei abgestelltem Verbrennungsmotor in der Stellung mit maximalem Verdrängervolumen für den Motorbetrieb bei einem Startvorgang des Verbrennungsmotors gehalten wird und nach dem Startvorgang des Verbrennungsmotors die Verdrängervolumenstelleinrichtung wieder freigeben wird, um bei selbstlaufendem Verbrennungsmotor das Verdrängervolumen zu verringern und im Pumpenbetrieb des Triebwerks bei einer Betätigung des Verbrauchers das Verdrängervolumen entsprechend des angeforderten Volumenstrombedarfs einstellen zu können.

Weitere Vorteile und Einzelheiten der Erfindung werden anhand der in den schematischen Figuren dargestellten Ausführungsbeispiele näher erläutert. Hierbei zeigt
- Figur 1: einen Antriebsstrang mit einer ersten Ausführungsform eines erfindungsgemäßen Triebwerks und
- Figur 2: einen Antriebsstrang mit einer zweiten Ausführungsform eines erfindungsgemäßen Triebwerks.

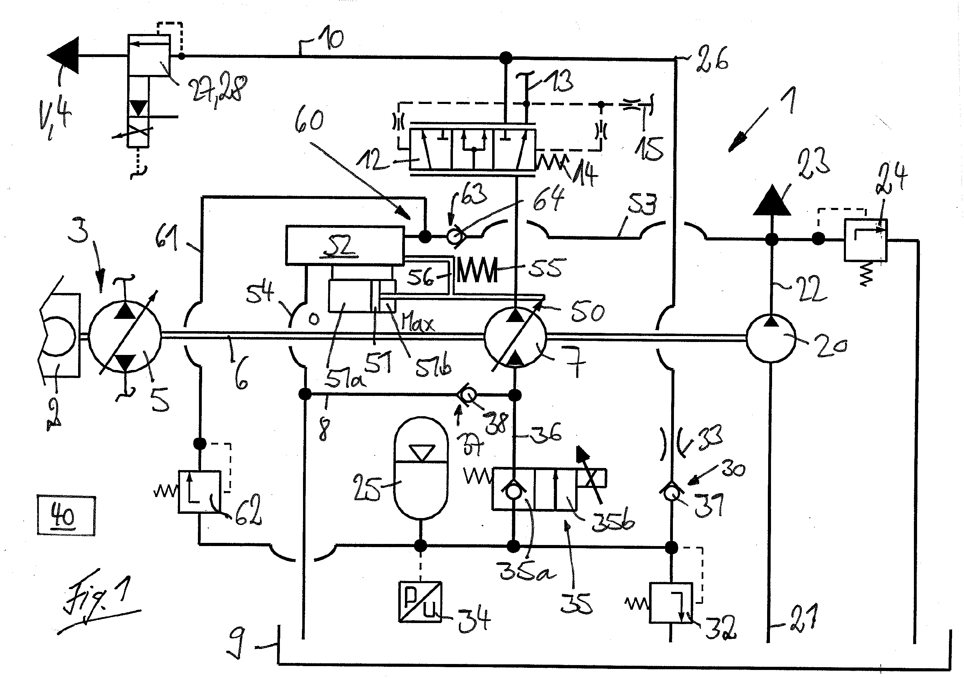

In der Figur 1 ist ein Antriebsstrang 1 einer nicht näher dargestellten mobilen Arbeitsmaschine, beispielsweise eines Flurförderzeugs oder einer Bau- bzw. Landmaschine, mit einem erfindungsgemäßen hydrostatischen Triebwerk 7 in einer Prinzipdarstellung dargestellt.

Der Antriebsstrang 1 besteht aus einem Verbrennungsmotor 2, beispielsweise einem Dieselmotor, einem von dem Verbrennungsmotor 2 angetriebenen Fahrantrieb 3 des Fahrzeugs sowie einem von dem Verbrennungsmotor 2 angetriebenen Arbeitshydrauliksystem 4 als hydraulische Verbraucher V.

Der Fahrantrieb 3 ist im dargestellten Ausführungsbeispiel als hydrostatischer Fahrantrieb ausgebildet, der aus einer im Fördervolumen verstellbaren Fahrpumpe 5 besteht, die zum Antrieb mit einer Abtriebswelle 6 des Verbrennungsmotors 2 in trieblicher Verbindung steht. Die Fahrpumpe 5 steht mit einem oder mehreren im Schluckvolumen festen oder verstellbaren, nicht näher dargestellten Hydromotoren im geschlossenen Kreislauf in Verbindung, die auf nicht mehr dargestellte Weise mit den angetriebenen Rädern der Arbeitsmaschine in Wirkverbindung stehen.

Der Fahrantrieb 3 kann alternativ als elektrischer Fahrantrieb mit einem von dem Verbrennungsmotor 2 angetriebenen elektrischen Generator und einem oder mehreren elektrischen Fahrmotoren gebildet werden. Zudem kann als Fahrantrieb ein mechanischer Fahrantrieb mit einem mechanischen Getriebe, beispielsweise einem Stufenschaltgetriebe oder einem Leistungsverzweigungsgetriebe oder einem Drehmomentwandlergetriebe, vorgesehen werden.

Das Arbeitshydrauliksystem 4 umfasst Arbeitsfunktionen der Arbeitsmaschine, beispielsweise bei einem Flurförderzeug eine Arbeitshydraulik zum Betätigen eines Lastaufnahmemittels an einem Hubmast, bzw. bei einer beispielsweise als Bagger ausgebildeten Baumaschine die Arbeitsfunktionen der von einer Schaufel ausgebildeten Arbeitsausrüstung.

Zur Versorgung des von dem Arbeitshydrauliksystems 4 gebildeten Verbrauchers V mit Druckmittel ist das als Verstellmaschine mit einem stufenlos verstellbaren Verdrängervolumen ausgebildete hydrostatische Triebwerk 7 vorgesehen, das bevorzugt als Axialkolbenmaschine in Schrägscheibenbauweise ausgebildet ist. Das Triebwerk 7 ist im offenen Kreislauf betrieben und steht zum Antrieb mit der Abtriebswelle 6 des Verbrennungsmotors 2 in trieblicher Verbindung.

Das Triebwerk 7 steht eingangsseitig mit der Saugseite mittels einer Ansaugleitung 8 mit einem Behälter 9 in Verbindung. Eine ausgangsseitig mit der Förderseite des Triebwerks 7 in Verbindung stehende Förderleitung 10 ist an eine nicht näher dargestellte Steuerventileinrichtung angeschlossen, mittels der die nicht näher dargestellten hydraulischen Verbraucher des Arbeitshydrauliksystems 4 steuerbar sind. Die Steuerventileinrichtung umfasst bevorzugt ein oder mehrere Wegeventile zur Betätigung der Verbraucher. Im dargestellten Ausführungsbeispiel ist weiterhin ein Prioritätsventil 12 dargestellt, mit dem die bevorzugte Versorgung eines von dem Triebwerk 7 versorgten Verbrauchers, beispielsweise einer hydraulischen Lenkungseinrichtung, sichergestellt werden kann. Das Prioritätsventil 12 ist eingangsseitig mit der Förderseite des Triebwerks 7 verbunden und steht ausgangsseitig mit der zu dem Arbeitshydrauliksystem 4 geführten Förderleitung 10 sowie einer zu der Lenkungseinrichtung geführten Förderleitung 13 in Verbindung. Das Prioritätsventil 12 ist von einer Feder 14 sowie dem in einer Lastdruckleitung 15 anstehenden Lastdruck der Lenkungseinrichtung gesteuert.

Der Antriebsstrang 1 umfasst weiterhin eine Speisepumpe 20, die zum Antrieb mit der Abtriebswelle 6 in Verbindung steht. Die Speisepumpe 20 ist im dargestellten Ausführungsbeispiel als Konstantpumpe mit einem konstanten Verdrängervolumen ausgebildet, die im offenen Kreislauf betrieben ist. Die Speisepumpe 20 steht hierzu mit der Saugseite über eine Ansaugleitung 21 mit dem Behälter 9 in Verbindung und fördert in eine an die Förderseite angeschlossene Speisedruckleitung 22, an die die entsprechenden Verbraucher eines Speisedruckkreises 23 angeschlossen sind, beispielsweise Verstelleinrichtungen zur Verstellung des Verdrängervolumens der Fahrpumpe 5 und des Triebwerks 7, eine Einspeisevorrichtung des hydrostatischen Fahrantriebs, eine Bremsanlage des Fahrzeugs und Vorsteuerventile für die Steuerventile des Arbeitshydrauliksystems 4. Zur Absicherung des Speisedruckes in dem Speisedruckkreis 23 ist der Speisedruckleitung 22 eine Druckbegrenzungseinrichtung 24, beispielsweise ein Druckbegrenzungsventil, zugeordnet.

Bei dem erfindungsgemäßen Antriebsstrang 1 ist das Triebwerk 7 des Arbeitshydrauliksystems 4 als Zweiquadrantentriebwerk ausgebildet, das bei gleicher Drehrichtung und gleicher Durchflussrichtung des Druckmittels als Pumpe und Motor betreibbar ist.

Im Pumpenbetrieb saugt das Triebwerk 7 über die Ansaugleitung 8 Druckmittel aus dem Behälter 9 an und fördert das Druckmittel über das Prioritätsventil 12 in die Förderleitung 10 des Arbeitshydrauliksystems 4 bzw. die Förderleitung 13 der Lenkungseinrichtung. Im Motorbetrieb des Triebwerks 7, in der das Triebwerk 7 als hydraulischer Starter einer Start-Stopp-Funktion zum Starten des Verbrennungsmotors 2 ausgebildet ist, wird das Triebwerk 7 an der Saugseite mit Druckmittel aus einem Druckmittelspeicher 25 angetrieben.

Der Druckmittelspeicher 25 ist zum Laden mit Druckmittel an die zu dem Arbeitshydrauliksystem 4 geführte Förderleitung 10 des Triebwerks 7 mittels einer Verbindungsleitung 26 angeschlossen.

In der Förderleitung 10 ist ein elektrisch betätigbares Ladeventil 27 angeordnet, das bei einer Ansteuerung in eine die Förderleitung 10 drosselnde Drosselstellung zum Aufstauen eines Druckes betätigbar ist. Das Ladeventil 27 ist bevorzugt als Retarderventil 28 ausgeführt, das im Bremsbetrieb des Fahrzeugs in eine Drosselstellung betätigt wird, um durch Aufstauen eines Druckes in der Förderleitung 10 ein zusätzliches, abbremsendes Drehmoment an der von der Kurbelwelle gebildeten Abtriebswelle 6 aufzuprägen, welches dem motorisch wirkenden Drehmoment an der Fahrpumpe 5 entgegenwirkt und so das Fahrzeug abbremst. In einem derartigen Bremsbetrieb bei drosselndem Retarderventil 28 kann zudem auf einfache Weise eine Energierückgewinnung erfolgen und der Druckmittelspeicher 25 geladen werden, so dass zum Laden des Druckmittelspeichers 25 die kinetische Energie des Fahrzeugs während eines Bremsvorgangs dient. Die Verbindungsleitung 26 ist hierbei stromauf des Ladeventils 27 und somit zwischen dem Ladeventil 27 und dem Prioritätsventil 12 an die Förderleitung 10 angeschlossen.

In der Verbindungsleitung 26 ist ein Sperrventil 30 angeordnet, das bevorzugt als in Richtung zum Druckmittelspeicher 25 öffnendes Rückschlagventil 31 ausgebildet ist. Weiterhin ist der Verbindungsleitung 26 zwischen dem Sperrventil 30 und dem Druckmittelspeicher 25 ein Druckbegrenzungsventil 32 zur Absicherung des Druckes in dem Druckmittelspeicher 25 zugeordnet. In der Verbindungsleitung 26 ist weiterhin zur Begrenzung des Ladevolumenstroms des Druckmittelspeichers 25 eine Drosseleinrichtung 33 angeordnet, die als Blende oder Drossel ausgeführt sein kann. Die Drosseleinrichtung 33 kann hierbei - wie dargestellt - stromauf des Sperrventils 30 oder alternativ stromab des Sperrventils 30 angeordnet sein.

Dem Druckmittelspeicher 25 ist weiterhin ein Drucksensor 34 zugeordnet. Der Drucksensor 34 dient zur Überwachung des Ladedruckes und somit des Ladezustands des Druckmittelspeichers 25.

Die Verbindung des Druckmittelspeichers 25 mit der Saugseite des Triebwerks 7 für den Motorbetrieb des Triebwerks 7 ist mittels eines elektrisch betätigbaren Steuerventils 35 steuerbar. Das Steuerventil 35 weist eine Sperrstellung 35a und eine Durchflussstellung 35b auf, wobei die Sperrstellung 35a bevorzugt leckagedicht ausgeführt ist mit einem in Richtung zum Triebwerk 7 sperrenden Sperrventil.

Das Steuerventil 35 ist in einer Verbindungsleitung 36 angeordnet, die von dem Druckmittelspeicher 25 zu der zur Saugseite des Triebwerks 7 geführten Ansaugleitung 8 geführt ist. Die mit dem Sperrventil 30 versehene Verbindungsleitung 26 ist hierbei zwischen dem Steuerventil 35 und dem Druckmittelspeicher 25 an die Verbindungsleitung 36 angeschlossen.

In der Ansaugleitung 8 des Triebwerks 7 ist ein in Richtung zum Behälter 9 sperrendes Sperrventil 37 angeordnet, das bevorzugt als ein in Richtung zum Behälter sperrendes Rückschlagventil 38 ausgebildet ist.

Eine elektronische Steuereinrichtung 40 steht eingangsseitig mit dem Drucksensor 34 in Verbindung und dient zur Ansteuerung des Ladeventils 27 sowie des Steuerventils 35.

Das als Verstellmaschine mit stufenlos veränderbarem Verdrängervolumen ausgebildete Triebwerk 7 weist zur Einstellung des Verdrängervolumens eine Verdrängervolumenstelleinrichtung 50 auf, beispielsweise eine in der Neigung verstellbare Schrägscheibe einer Axialkolbenmaschine in Schrägscheibenbauweise. Die Verdrängervolumenstelleinrichtung 50 umfasst zur Betätigung eine mit der Verdrängervolumenstelleinrichtung 50 in Wirkverbindung stehende Stellkolbeneinrichtung 51. Das erfindungsgemäße Triebwerk 7 ist als einseitig verstellbares Triebwerk ausgebildet, bei dem die Verdrängervolumenstelleinrichtung 50 ausgehend von einer Stellung mit minimalem Verdrängervolumen, bevorzugt einer Stellung mit Verdrängervolumen Null, in eine Stellrichtung bzw. Schwenkrichtung auf eine Stellung mit maximalem Verdrängervolumen verstellbar ist. Die Stellkolbeneinrichtung 51 weist einen in Richtung des maximalen Verdrängervolumens wirkenden Stelldruckraum 51a und einen in Richtung des minimalen Verdrängervolumens wirkenden Stelldruckraum 51b auf.

Die Verdrängervolumenstelleinrichtung 50 ist mittels einer Stelleinrichtung 52 betätigbar. Die Stelleinrichtung 52 weist ein nicht näher dargestelltes Stellventil auf, mit dem die Beaufschlagung der Stelldruckräume 51a, 51b der Stellkolbeneinrichtung 51 der Verdrängervolumenstelleinrichtung 50 mit einem Stelldruck bzw. deren Entlastung zu dem Behälter 9 steuerbar ist.

Die Stelleinrichtung 52 ist zur Versorgung mit Druckmittel und zur Erzeugung eines Stelldruckes in den Stelldruckräumen 51a bzw. 51b über eine Stelldruckleitung 53 mit der Speisedruckleitung 22 und somit dem Speisedruckkreis 23 verbunden. Weiterhin weist die Stelleinrichtung 52 einen Anschluss an eine zu dem Behälter geführte Behälterleitung 54 auf. Die Stelleinrichtung 52 ist elektrisch ansteuerbar und steht hierzu mit der elektronischen Steuereinrichtung 40 in Verbindung. In dem dargestellten Ausführungsbeispiel umfasst die Stelleinrichtung 52 ein Regelventil, wobei eine mechanische Rückmeldung und Rückführung 56 der Ist-Position der Verdrängervolumenstelleinrichtung 50 auf die Stelleinrichtung 52 vorgesehen ist. Weiterhin ist eine als Druckfeder ausgebildete Federeinrichtung 55 vorgesehen, die die Verdrängervolumenstelleinrichtung 50 in Richtung des minimalen Verdrängervolumens beaufschlagt, der durch einen entsprechenden Anschlag der Verdrängervolumenstelleinrichtung 50 begrenzt werden kann.

Bei dem erfindungsgemäßen Triebwerk 7 wird die Verdrängervolumenstelleinrichtung 50 in einem Start-Stopp-Betrieb des Verbrennungsmotors 2 durch entsprechende Ansteuerung der Stelleinrichtung 52 zeitlich vor dem Abstellen und somit vor dem Abschalten des Verbrennungsmotors 2 in die Stellung mit maximalem Verdrängervolumen beaufschlagt. Um einen direkten Startvorgang des Verbrennungsmotors 2 im Motorbetrieb des Triebwerks 7 bei in die Durchflussstellung 35b angesteuertem Steuerventil 35 ohne vorheriges Betätigen und Verstellen der Verdrängervolumenstelleinrichtung 50 in die Stellung mit maximalem Verdrängervolumen zu erzielen, ist eine Sicherungseinrichtung 60 vorgesehen, die bei abgestelltem Verbrennungsmotor 2 die Verdrängervolumenstelleinrichtung 50 in der Stellung mit maximalem Verdrängervolumen hält.

Hierzu ist die Stelleinrichtung 52 zusätzlich zur Versorgung mit Druckmittel und somit zur Versorgung mit einem Stelldruck an den Druckmittelspeicher 25 angeschlossen, wozu eine von der Stelldruckleitung 53 zu der Verbindungsleitung 36 geführte Druckmittelleitung 61 vorgesehen ist, in der ein Druckminderventil 62 angeordnet ist. Die Druckmittelleitung 61 ist hierbei stromauf des Steuerventils 35 und somit zwischen dem Druckmittelspeicher 25 und dem Steuerventil 35 an die Verbindungsleitung 36 angeschlossen. Die Sicherungseinrichtung 60 umfasst weiterhin ein Sperrventil 63, das in der Stelldruckleitung 53 angeordnet ist. Die Druckmittelleitung 61 ist hierbei zwischen dem Sperrventil 63 und der Stelleinrichtung 52 an die Stelldruckleitung 53 angeschlossen. Das Sperrventil 63 ist im dargestellten Ausführungsbeispiel als in Richtung zur Stelleinrichtung 52 öffnendes Rückschlagventil 64 ausgebildet.

Über die Druckmittelleitung 61 und die Verbindung der Stelleinrichtung 52 mit dem Druckmittelspeicher 25 wird somit erzielt, dass der Stelldruck zum Halten der Verdrängervolumenstelleinrichtung 50 in der Stellung mit maximalem Verdrängervolumen bei abgestelltem Verbrennungsmotor 2 aus dem Druckmittelspeicher 25 über das Druckminderventil 62 zur Verfügung gestellt wird, so dass die Verdrängervolumenstelleinrichtung 50 bei abgestelltem Verbrennungsmotor 2 über den Druckmittelspeicher 25 in der Stellung mit maximalem Verdrängervolumen gehalten wird. Das Sperrventil 63 verhindert, dass sich der Druckmittelspeicher 25 bei abgestelltem Verbrennungsmotor 2 über den Speisedruckkreis 23 entladen kann. Bei abgestelltem Verbrennungsmotor 2 trennt somit das Sperrventil 63 die Verstelleinrichtung 52 von dem Speisedruckkreis 23 ab.

Mit der Sicherungseinrichtung 60 der Figur 1 wird somit erzielt, dass die Verdrängervolumenstelleinrichtung 50 bei abgestelltem Verbrennungsmotor 2 in der Stellung mit maximalem Verdrängervolumen gehalten wird, so dass bei einem Startvorgang des Verbrennungsmotors 2 und einer Ansteuerung des Steuerventils 35 in die Durchflussstellung 35b, wobei Druckmittel aus dem geladenen Druckmittelspeicher 25 zur Saugseite des Triebwerks 7 strömt, aufgrund der bereits in der Stellung mit maximalem Verdrängervolumen stehenden Verdrängervolumenstelleinrichtung 50 ein unmittelbarer Motorbetrieb des Triebwerks 7 zum schnellen Starten des Verbrennungsmotors 2 ohne vorheriges Verstellen der Verdrängervolumenstelleinrichtung 50 in die Stellung mit maximalem Verdrängervolumen erzielt wird. Ein Startvorgang des Verbrennungsmotors 2 mit dem erfindungsgemäßen Triebwerk 7 erfolgt somit in einer kurzen Zeitspanne in einer Start-Stopp-Funktion.

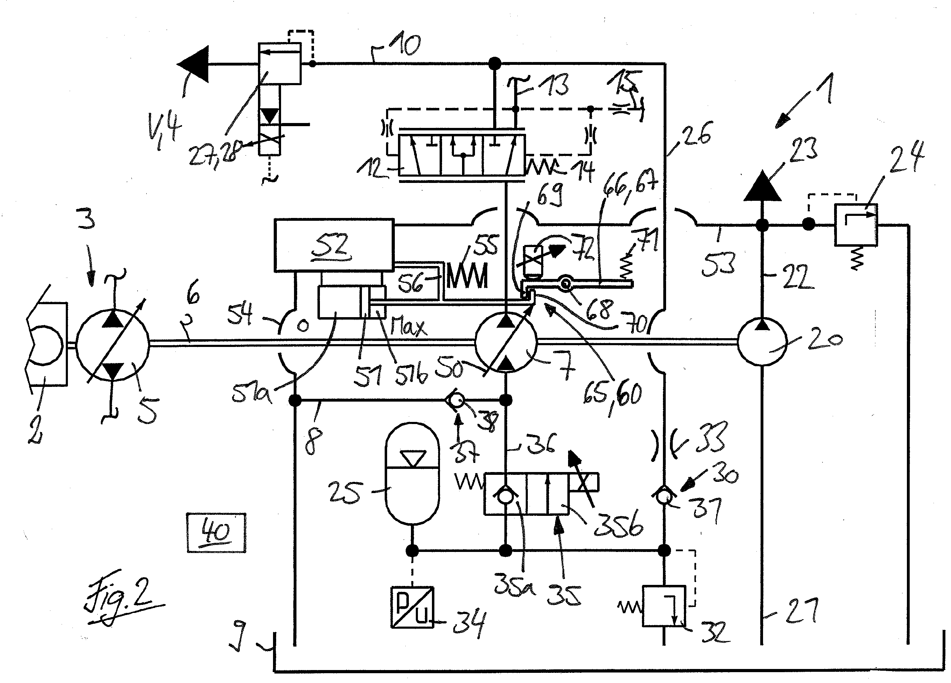

In der Figur 2 ist eine zweite Ausführungsform eines erfindungsgemäßen Triebwerks dargestellt, bei dem gleiche Bauteile mit gleichen Bezugsziffern versehen sind.

Anstelle der hydraulischen Sicherungseinrichtung 60 der Figur 1 ist bei der Figur 2 die Sicherungseinrichtung 60 als mechanische Verriegelung 65 der Verdrängervolumenstelleinrichtung 50 in der Stellung mit maximalem Verdrängervolumen ausgebildet. Die mechanische Verriegelung 65 umfasst ein Verriegelungsmittel 66, das zwischen einer Verriegelungsstellung und einer Lösestellung betätigbar ist und in der Verriegelungsstellung formschlüssig mit der in der Stellung mit maximalem Verdrängervolumen befindlichen Verdrängervolumenstelleinrichtung 50 in Wirkverbindung bringbar ist. Das Verriegelungsmittel 66 ist im dargestellten Ausführungsbeispiel als um eine Schwenkachse 68 verschwenkbarer Hebel 67 ausgebildet, der mit einer Verriegelungsnase 69 versehen ist, die in der Verriegelungsstellung mit einem Verriegelungsabschnitt 70 der Verdrängervolumenstelleinrichtung 50 zusammenwirkt bzw. in diese eingreift.

Im dargestellten Ausführungsbeispiel ist das als Verriegelungshebel 67 ausgebildete Verriegelungsmittel 66 mit einer Federeinrichtung 71, beispielsweise einer Druckfeder, in die Lösestellung beaufschlagt und mittels einer elektrischen Betätigungseinrichtung 72, beispielsweise einem Schaltmagnet, in die Verriegelungsstellung betätigbar. Die elektrische Betätigungseinrichtung 72 steht zur Ansteuerung mit der elektronischen Steuereinrichtung 40 in Verbindung.

Bei dem Ausführungsbeispiel der Figur 2 wird ebenfalls die Verdrängervolumenstelleinrichtung 50 durch entsprechende Ansteuerung der Stelleinrichtung 52 zeitlich vor dem Abstellen und somit dem Abschalten des Verbrennungsmotors 2 in die Stellung mit maximalem Verdrängervolumen beaufschlagt. Nach Erreichen dieser Stellung wird durch entsprechende Ansteuerung der Betätigungseinrichtung 72 das Verriegelungsmittel 66 in die Verriegelungsstellung betätigt, so dass die Verdrängervolumenstelleinrichtung 50 bei abgestelltem Verbrennungsmotor 2 in der Stellung mit maximalem Verdrängervolumen formschlüssig gehalten wird.

Bei einem Startvorgang des Verbrennungsmotors 2 und einer Ansteuerung des Steuerventils 35 in die Durchflussstellung 35b, wobei Druckmittel aus dem geladenen Druckmittelspeicher 25 zur Saugseite des Triebwerks 7 strömt, wird somit aufgrund der bereits in der Stellung mit maximalem Verdrängervolumen stehenden Verdrängervolumenstelleinrichtung 50 ein unmittelbarer Motorbetrieb des Triebwerks 7 zum schnellen Starten des Verbrennungsmotors 2 ohne vorheriges Verstellen der Verdrängervolumenstelleinrichtung 50 in die Stellung mit maximalem Verdrängervolumen erzielt. Ein Startvorgang des Verbrennungsmotors 2 mit dem erfindungsgemäßen Triebwerk 7 erfolgt somit in einer kurzen Zeitspanne in einer Start-Stopp-Funktion.

Nach dem Startvorgang des Verbrennungsmotors 2 und somit selbstlaufendem Verbrennungsmotor 2, wozu ein nicht näher dargestellter, mit der Steuereinrichtung 40 verbundener Drehzahlsensor vorgesehen sein kann, der mit der Abtriebswelle 6 oder dem Verbrennungsmotor 2 in Verbindung steht, wird die Ansteuerung der Betätigungseinrichtung 72 beendet, so dass das Verriegelungsmittel 66 mittels der Federeinrichtung 71 in die Lösestellung beaufschlagt wird, so dass die Verdrängervolumenstelleinrichtung 50 freigegeben wird.

## Patentansprüche

1. Hydrostatisches Triebwerk (7), das als Verstellmaschine mit einem stufenlos verstellbaren Verdrängervolumen ausgebildet ist und als Pumpe und Motor betreibbar und mit einem Verbrennungsmotor (2) trieblich verbindbar ist, wobei das Triebwerk (7) im Pumpenbetrieb mit einer Saugseite Druckmittel aus einem Behälter (9) ansaugt und in eine zu mindestens einem Verbraucher (V) geführte Förderleitung (10) fördert und wobei das Triebwerk (7) im Motorbetrieb als hydraulischer Starter zum Starten des Verbrennungsmotors (2) ausgebildet ist, wobei dem Triebwerk (7) im Motorbetrieb an der Saugseite Druckmittel aus einem Druckmittelspeicher (25) zuführbar ist, wobei das Verdrängervolumen des Triebwerks mittels einer Verdrängervolumenstelleinrichtung (50) einstellbar ist, die mit einer Stelleinrichtung (52) betätigbar ist, **dadurch gekennzeichnet, dass** die Stelleinrichtung (52) elektrisch ansteuerbar und eine die Stelleinrichtung (52) ansteuernde elektronische Steuereinrichtung (40) vorgesehen ist, wobei die elektronische Stelleinrichtung (40) derart ausgebildet ist, dass die Verdrängervolumenstelleinrichtung (50) durch entsprechende Ansteuerung der Stelleinrichtung (52) zeitlich vor dem Abstellen des Verbrennungsmotors (2) in die Stellung mit maximalem Verdrängervolumen beaufschlagt wird, und dass eine Sicherungseinrichtung (60) vorgesehen ist, die bei abgestelltem Verbrennungsmotor (2) die Verdrängervolumenstelleinrichtung (50) in der Stellung mit maximalem Verdrängervolumen hält.

2. Hydrostatisches Triebwerk nach Anspruch 1, **dadurch gekennzeichnet, dass** die Stelleinrichtung (52) zur Versorgung mit Druckmittel an einen Speisedruckkreis (23) und an den Druckmittelspeicher (25) angeschlossen ist und die Sicherungseinrichtung (60) als Sperrventil (63) ausgebildet ist, das in der Verbindung der Stelleinrichtung (52) mit dem Speisedruckkreis (23) angeordnet ist.

3. Hydrostatisches Triebwerk nach Anspruch 2, **dadurch gekennzeichnet, dass** das Sperrventil (63) als in Richtung zum Speisedruckkreis (23) sperrendes Rückschlagventil (64) ausgebildet ist.

4. Hydrostatisches Triebwerk nach Anspruch 2 oder 3, **dadurch gekennzeichnet, dass** zur Steuerung der Verbindung des Druckmittelspeichers (25) mit der Saugseite des Triebwerks (7) ein elektrisch betätigbares Steuerventil (35) vorgesehen ist, wobei die Stelleinrichtung (52) unabhängig von der Stellung des Steuerventils (35) mit Druckmittel aus dem Druckmittelspeicher (25) versorgbar ist.

5. Hydrostatisches Triebwerk nach Anspruch 4, **dadurch gekennzeichnet, dass** das Steuerventil (35) in einer von dem Druckmittelspeicher (25) zu einer Ansaugleitung (8) der Hydraulikpumpe (7) geführten Verbindungsleitung (36) angeordnet ist, wobei die Ansaugleitung (8) von dem Behälter (9) zur Saugseite der Hydraulikpumpe (7) geführt ist, und zur Versorgung der Stelleinrichtung (52) mit Druckmittel aus dem Druckmittelspeicher (52) eine Druckmittelleitung (61) vorgesehen ist, die stromauf des Steuerventils (35) an die Verbindungsleitung (36) angeschlossen ist.

6. Hydrostatisches Triebwerk nach Anspruch 5, **dadurch gekennzeichnet, dass** die Druckmittelleitung (61) an eine von dem Speisedruckkreis (23) zu der Stelleinrichtung (52) geführte Stelldruckleitung (53) angeschlossen ist, in der das Sperrventil (63) angeordnet ist, wobei die Druckmittelleitung (61) zwischen dem Sperrventil (63) und der Stelleinrichtung (52) an die Stelldruckleitung (53) angeschlossen ist.

7. Hydrostatisches Triebwerk nach Anspruch 1, **dadurch gekennzeichnet, dass** die Sicherungseinrichtung (60) als mechanische Verriegelung (65) der Verdrängervolumenstelleinrichtung (50) ausgebildet ist.

8. Hydrostatisches Triebwerk nach Anspruch 7, **dadurch gekennzeichnet, dass** die mechanische Verriegelung (65) von einem eine Verriegelungsstellung und eine Lösestellung aufweisenden Verriegelungsmittel (66) gebildet ist, das mit der in der Stellung mit maximalem Verdrängervolumen befindlichen Verdrängervolumenstelleinrichtung (50) formschlüssig in Wirkverbindung bringbar ist.

9. Hydrostatisches Triebwerk nach Anspruch 8, **dadurch gekennzeichnet, dass** das Verriegelungsmittel (66) als Verriegelungshebel (67) ausgebildet ist.

10. Hydrostatisches Triebwerk nach Anspruch 8 oder 9, **dadurch gekennzeichnet, dass** das Verriegelungsmittel (66) mittels einer Federeinrichtung (71) in eine Lösestellung betätigt ist und mittels einer elektrischen Betätigungseinrichtung (72) in eine Verriegelungsstellung betätigbar ist.

11. Hydrostatisches Triebwerk nach Anspruch 10, **dadurch gekennzeichnet, dass** elektrische Betätigungseinrichtung (72) als Schaltmagnet ausgebildet ist.

12. Hydrostatisches Triebwerk nach einem der Ansprüche 9 bis 11, **dadurch gekennzeichnet, dass** das Verriegelungsmittel (66) bei Erreichen der Stellung mit maximalem Verdrängervolumen in die Verriegelungsstellung betätigbar ist.

13. Hydrostatisches Triebwerk nach einem der Ansprüche 9 bis 12, **dadurch gekennzeichnet, dass** das Verriegelungsmittel (66) nach dem Startvorgang des Verbrennungsmotors (2) in die Lösestellung betätigbar ist.

14. Hydrostatisches Triebwerk nach einem der Ansprüche 1 bis 13, **dadurch gekennzeichnet, dass** die Verdrängervolumenstelleinrichtung (50) mittels einer Federeinrichtung (55) in Richtung eines minimalen Verdrängervolumens beaufschlagt ist.

15. Hydrostatisches Triebwerk nach einem der Ansprüche 1 bis 14, **dadurch gekennzeichnet, dass** das Triebwerk (7) als einseitig verstellbares Triebwerk ausgebildet ist und die Verdrängervolumenstelleinrichtung (50) des Triebwerks (7) ausgehend von einer Stellung mit minimalem Verdrängervolumen in eine Stellrichtung verstellbar ist.

16. Hydrostatisches Triebwerk nach einem der Ansprüche 1 bis 15, **dadurch gekennzeichnet, dass** der Verbraucher (V) als Arbeitshydrauliksystem (4) einer Arbeitsmaschine ausgebildet ist und das Triebwerk (7) im Pumpenbetrieb das Arbeitshydrauliksystem (4) mit Druckmittel versorgt.

17. Hydrostatisches Triebwerk nach einem der Ansprüche 1 bis 16, **dadurch gekennzeichnet, dass** das Triebwerk (7) als Axialkolbenmaschine in Schrägscheibenbauweise ausgebildet ist.

18. Antriebsstrang eines als mobile Arbeitsmaschine ausgebildeten Fahrzeugs mit einem von einem Verbrennungsmotor (2) angetrieben hydrostatischen Triebwerk (7) nach einem der vorangegangenen Ansprüche, wobei das Triebwerk (7) im Motorbetrieb einen hydraulischen Starter des Verbrennungsmotors (2) bildet und im Pumpenbetrieb ein Arbeitshydrauliksystem (4) der Arbeitsmaschine mit Druckmittel versorgt.

19. Verfahren zum Betrieb eines Antriebsstranges nach Anspruch 18, wobei zeitlich vor dem Abstellen des Verbrennungsmotors (2) durch eine Ansteuerung der Stelleinrichtung (52) die Verdrängervolumenstelleinrichtung (50) des Triebwerks (7) in die Stellung mit maximalem Verdrängervolumen beaufschlagt und mittels der Sicherungseinrichtung (60) bei abgestelltem Verbrennungsmotor (2) in dieser Stellung gehalten wird.

20. Verfahren nach Anspruch 19 und Anspruch 18 in dessen Rückbezug auf einen der Ansprüche 8 bis 13, **dadurch gekennzeichnet, dass** bei Erreichen der Stellung mit maximalem Verdrängervolumen das Verriegelungsmittel (66) in die Verriegelungsstellung betätigt wird und nach dem Startvorgang des Verbrennungsmotors (2) das Verriegelungsmittel (66) in die Lösestellung betätigt wird.

## Claims

1. Hydrostatic power unit (7) which is configured as an adjustable machine with a continuously adjustable displacement volume and which is operable as a pump and as a motor and which is connectable in terms of drive to an internal combustion engine (2), wherein the power unit (7), in the pump mode, draws pressure medium by way of a suction side out of a tank (9) and conveys said pressure medium into a conveying line (10) leading to at least one consumer (V), and wherein the power unit (7), in the motor mode, is configured as a hydraulic starter for starting the internal combustion engine (2), wherein pressure medium can be fed from a pressure medium accumulator (25) to the power unit (7) in the motor mode at the suction side, wherein the displacement volume of the power unit is settable by means of a displacement volume setting device (50) which is actuatable by means of a setting device (52), **characterized in that** the setting device (52) is electrically activatable, and an electronic control device (40) which activates the setting device (52) is provided, wherein the electronic setting device (40) is configured such that, through corresponding activation of the setting device (52), the displacement volume setting device (50) is, at a time prior to the shutdown of the internal combustion engine (2), forced into the position with maximum displacement volume, and **in that** a securing device (60) is provided which, when the internal combustion engine (2) has been shut down, holds the displacement volume setting device (50) in the position with maximum displacement volume.

2. Hydrostatic power unit according to Claim 1, **characterized in that** the setting device (52) is, for the supply of pressure medium, attached to a feed pressure circuit (23) and to the pressure medium accumulator (25), and the securing device (60) is configured as a shut-off valve (63) which is arranged in the connection of the setting device (52) to the feed pressure circuit (23).

3. Hydrostatic power unit according to Claim 2, **characterized in that** the shut-off valve (63) is configured as a check valve (64) which blocks in the direction of the feed pressure circuit (23).

4. Hydrostatic power unit according to Claim 2 or 3, **characterized in that** an electrically actuatable control valve (35) is provided for controlling the connection of the pressure medium accumulator (25) to the suction side of the power unit (7), wherein the setting device (52) can be supplied with pressure medium from the pressure medium accumulator (25) irrespective of the position of the control valve (35).

5. Hydrostatic power unit according to Claim 4, **characterized in that** the control valve (35) is arranged in a connecting line (36) leading from the pressure medium accumulator (25) to an intake line (8) of the hydraulic pump (7), wherein the intake line (8) leads from the tank (9) to the suction side of the hydraulic pump (7), and, for the supply of pressure medium to the setting device (52) from the pressure medium accumulator (52), a pressure medium line (61) is provided which is attached to the connecting line (36) upstream of the control valve (35) .

6. Hydrostatic power unit according to Claim 5, **characterized in that** the pressure medium line (61) is attached to a setting pressure line (53) leading from the feed pressure circuit (23) to the setting device (52), in which setting pressure line the shut-off valve (63) is arranged, wherein the pressure medium line (61) is attached, between the shut-off valve (63) and the setting device (52), to the setting pressure line (53).

7. Hydrostatic power unit according to Claim 1, **characterized in that** the securing device (60) is configured as a mechanical lock (65) of the displacement volume setting device (50).

8. Hydrostatic power unit according to Claim 7, **characterized in that** the mechanical lock (65) is formed by a locking means (66) which has a locking position and a release position and which can be placed in operative connection in positively locking fashion with the displacement volume setting device (50) situated in the position with maximum displacement volume.

9. Hydrostatic power unit according to Claim 8, **characterized in that** the locking means (66) is configured as a locking lever (67).

10. Hydrostatic power unit according to Claim 8 or 9, **characterized in that** the locking means (66) is actuated into a release position by means of a spring device (71) and is actuatable into a locking position by means of an electric actuating device (72) .

11. Hydrostatic power unit according to Claim 10, **characterized in that** the electric actuating device (72) is configured as a switching magnet.

12. Hydrostatic power unit according to one of Claims 9 to 11, **characterized in that** the locking means (66) is actuatable into the locking position when the position with maximum displacement volume is reached.

13. Hydrostatic power unit according to one of Claims 9 to 12, **characterized in that** the locking means (66) is actuatable into the release position after the starting process of the internal combustion engine (2) .

14. Hydrostatic power unit according to one of Claims 1 to 13, **characterized in that** the displacement volume setting device (50) is acted on in the direction of a minimum displacement volume by means of a spring device (55).

15. Hydrostatic power unit according to one of Claims 1 to 14, **characterized in that** the power unit (7) is configured as a unilaterally adjustable power unit, and the displacement volume setting device (50) of the power unit (7) is adjustable from a position with minimum displacement volume in a setting direction.

16. Hydrostatic power unit according to one of Claims 1 to 15, **characterized in that** the consumer (V) is configured as a working hydraulics system (4) of a working machine, and the power unit (7), in the pump mode, supplies pressure medium to the working hydraulics system (4).

17. Hydrostatic power unit according to one of Claims 1 to 16, **characterized in that** the power unit (7) is configured as an axial piston machine of swashplate type of construction.

18. Drivetrain of a vehicle configured as a mobile working machine having a hydrostatic power unit (7) according to one of the preceding claims driven by an internal combustion engine (2), wherein the power unit (7), in the motor mode, forms a hydraulic starter of the internal combustion engine (2) and, in the pump mode, supplies pressure medium to a working hydraulics system (4) of the working machine.

19. Method for operating a drivetrain according to Claim 18, wherein, by means of an activation of the setting device (52), at a time prior to the shutdown of the internal combustion engine (2), the displacement volume setting device (50) of the power unit (7) is forced into the position with maximum displacement volume, and said displacement volume setting device is held in said position by means of the securing device (60) when the internal combustion engine (2) has been shut down.

20. Method according to Claim 19 and Claim 18 when referred back to one of Claims 8 to 13, **characterized in that**, when the position with maximum displacement volume is reached, the locking means (66) is actuated into the locking position, and after the starting process of the internal combustion engine (2), the locking means (66) is actuated into the release position.

## Revendications

1. Groupe motopropulseur hydrostatique (7) qui est réalisé en tant que machine de déplacement avec un volume de déplacement réglable en continu et qui peut être entraîné en tant que pompe et en tant que moteur et qui peut être connecté par entraînement à un moteur à combustion interne (2), le groupe motopropulseur (7), en mode pompe, aspirant par un côté d'aspiration un fluide sous pression provenant d'un réservoir (9) et le refoulant dans une conduite de refoulement (10) guidée vers au moins un consommateur (V), et le groupe motopropulseur (7), en mode moteur, étant réalisé sous forme de démarreur hydraulique pour le démarrage du moteur à combustion interne (2), du fluide sous pression pouvant être acheminé à partir d'un accumulateur de fluide sous pression (25) au groupe motopropulseur (7) en mode moteur au niveau du côté d'aspiration, le volume de déplacement du groupe motopropulseur pouvant être ajusté au moyen d'un dispositif de réglage du volume de déplacement (50) qui peut être actionné avec un dispositif de réglage (52), **caractérisé en ce que** le dispositif de réglage (52) peut être commandé électriquement et un dispositif de commande électronique (40) commandant le dispositif de réglage (52) est prévu, le dispositif de réglage électronique (40) étant réalisé de telle sorte que le dispositif de réglage du volume de déplacement (50), par une commande correspondant du dispositif de réglage (52), puisse être sollicité dans la position avec un volume de déplacement maximal avant la coupure du moteur à combustion interne (2), et **en ce qu'**un dispositif de fixation (60) est prévu, lequel, lorsque le moteur à combustion interne (2) est coupé, maintient le dispositif de réglage du volume de déplacement (50) dans la position avec le volume de déplacement maximal.

2. Groupe motopropulseur hydrostatique selon la revendication 1, **caractérisé en ce que** le dispositif de réglage (52), pour l'alimentation en fluide sous pression, est raccordé à un circuit de pression d'alimentation (23) et à l'accumulateur de fluide sous pression (25), et le dispositif de fixation (60) est réalisé sous forme de soupape d'arrêt (63) qui est disposée dans la liaison du dispositif de réglage (52) au circuit de pression d'alimentation (23).

3. Groupe motopropulseur hydrostatique selon la revendication 2, **caractérisé en ce que** la soupape d'arrêt (63) est réalisée sous la forme d'un clapet antiretour (64) bloquant dans la direction du circuit de pression d'alimentation (23).

4. Groupe motopropulseur hydrostatique selon la revendication 2 ou 3, **caractérisé en ce que** pour la commande de la liaison de l'accumulateur de fluide sous pression (25) au côté d'aspiration du groupe motopropulseur (7), il est prévu une soupape de commande (35) pouvant être actionnée électriquement, le dispositif de réglage (52) pouvant être alimenté en fluide sous pression à partir de l'accumulateur de fluide sous pression (25) indépendamment de la position de la soupape de commande (35).

5. Groupe motopropulseur hydrostatique selon la revendication 4, **caractérisé en ce que** la soupape de commande (35) est disposée dans une conduite de liaison (36) guidée depuis l'accumulateur de fluide sous pression (25) jusqu'à une conduite d'aspiration (8) de la pompe hydraulique (7), la conduite d'aspiration (8) étant guidée depuis le réservoir (9) jusqu'au côté d'aspiration de la pompe hydraulique (7), et, pour l'alimentation du dispositif de réglage (52) en fluide sous pression provenant de l'accumulateur de fluide sous pression (52), il est prévu une conduite de fluide sous pression (61) qui est raccordée en amont de la soupape de commande (35) à la conduite liaison (36) .

6. Groupe motopropulseur hydrostatique selon la revendication 5, **caractérisé en ce que** la conduite de fluide sous pression (61) est raccordée à une conduite de pression de réglage (53) guidée depuis le circuit de pression d'alimentation (23) jusqu'au dispositif de réglage (52), dans laquelle est disposée la soupape d'arrêt (63), la conduite de fluide sous pression (61) étant raccordée entre la soupape d'arrêt (63) et le dispositif de réglage (52) à la conduite de pression de réglage (53) .

7. Groupe motopropulseur hydrostatique selon la revendication 1, **caractérisé en ce que** le dispositif de fixation (60) est réalisé sous forme de verrouillage mécanique (65) du dispositif de réglage du volume de déplacement (50).

8. Groupe motopropulseur hydrostatique selon la revendication 7, **caractérisé en ce que** le verrouillage mécanique (65) est formé par un moyen de verrouillage (66) présentant une position de verrouillage et une position de déverrouillage, lequel peut être amené en liaison fonctionnelle par engagement par correspondance de formes avec le dispositif de réglage du volume de déplacement (50) se trouvant dans la position de volume de déplacement maximal.

9. Groupe motopropulseur hydrostatique selon la revendication 8, **caractérisé en ce que** le moyen de verrouillage (66) est réalisé sous forme de levier de verrouillage (67).

10. Groupe motopropulseur hydrostatique selon la revendication 8 ou 9, **caractérisé en ce que** le moyen de verrouillage (66) est actionné au moyen d'un dispositif à ressort (71) dans une position de déverrouillage et peut être actionné dans une position de verrouillage au moyen d'un dispositif d'actionnement électrique (72).

11. Groupe motopropulseur hydrostatique selon la revendication 10, **caractérisé en ce que** le dispositif d'actionnement électrique (72) est réalisé sous forme d'aimant de commutation.

12. Groupe motopropulseur hydrostatique selon l'une quelconque des revendications 9 à 11, **caractérisé en ce que** le moyen de verrouillage (66), une fois la position de volume de déplacement maximal atteinte, peut être actionné dans la position de verrouillage.

13. Groupe motopropulseur hydrostatique selon l'une quelconque des revendications 9 à 12, **caractérisé en ce que** le moyen de verrouillage (66), après l'opération de démarrage du moteur à combustion interne (2), peut être actionné dans la position de déverrouillage.

14. Groupe motopropulseur hydrostatique selon l'une quelconque des revendications 1 à 13, **caractérisé en ce que** le dispositif de réglage du volume de déplacement (50) est sollicité au moyen d'un dispositif de ressort (55) dans la direction d'un volume de déplacement minimal.

15. Groupe motopropulseur hydrostatique selon l'une quelconque des revendications 1 à 14, **caractérisé en ce que** le groupe motopropulseur (7) est réalisé sous forme de groupe motopropulseur réglable d'un côté et le dispositif de réglage du volume de déplacement (50) du groupe motopropulseur (7) peut être réglé à partir d'une position de volume de déplacement minimal dans une position de réglage.

16. Groupe motopropulseur hydrostatique selon l'une quelconque des revendications 1 à 15, **caractérisé en ce que** le consommateur (V) est réalisé sous forme de système hydraulique de travail (4) d'une machine de travail et le groupe motopropulseur (7) en mode pompe alimente en fluide sous pression le système hydraulique de travail (4).

17. Groupe motopropulseur hydrostatique selon l'une quelconque des revendications 1 à 16, **caractérisé en ce que** le groupe motopropulseur (7) est réalisé sous forme de machine à piston axial du type à plateau en biais.

18. Chaîne cinématique d'un véhicule réalisé sous forme de machine de travail mobile, comprenant un groupe motopropulseur hydrostatique (7) selon l'une quelconque des revendications précédentes entraîné par un moteur à combustion interne (2), le groupe motopropulseur (7), en mode moteur, formant un démarreur hydraulique du moteur à combustion interne (2) et en mode pompe, alimentant en fluide sous pression un système hydraulique de travail (4) de la machine de travail.

19. Procédé pour faire fonctionner une chaîne cinématique selon la revendication 18, dans lequel, avant la coupure du moteur à combustion interne (2), par une commande du dispositif de réglage (52), le dispositif de réglage du volume de déplacement (50) du groupe motopropulseur (7) est sollicité dans la position de volume de déplacement maximal et est maintenu dans cette position au moyen du dispositif de fixation (60) lorsque le moteur à combustion interne (2) est coupé.

20. Procédé selon la revendication 19 et la revendication 18 lorsque celle-ci se rapporte à l'une des revendications 8 à 13, **caractérisé en ce qu'**une fois la position de volume de déplacement maximal atteinte, le moyen de verrouillage (66) est actionné dans la position de verrouillage et après l'opération de démarrage du moteur à combustion interne (2), le moyen de verrouillage (66) est actionné dans la position de déverrouillage.
